Europäisches Patentamt

European Patent Office

Office européen des brevets

(11) Publication number: **0 048 678**
**B1**

# EUROPEAN PATENT SPECIFICATION

(45) Date of publication of patent specification: **12.06.85**

(51) Int. Cl.⁴: **C 08 J 5/10, C 08 L 21/00**

(21) Application number: **81630052.9**

(22) Date of filing: **15.09.81**

(54) Composite of rubber and metal reinforcement therefore.

(30) Priority: **19.09.80 US 189385**

(43) Date of publication of application:
**31.03.82 Bulletin 82/13**

(45) Publication of the grant of the patent:
**12.06.85 Bulletin 85/24**

(84) Designated Contracting States:
**DE FR GB IT LU**

(56) References cited:
EP-A-0 026 294
EP-A-0 031 398
US-A-3 897 583
US-A-4 148 764

CHEMICAL ABSTRACTS, vol. 85, no. 20, 20th
November 1976, page 69, no. 144409t,
Columbus, Ohio, U.S.A. G.A. BLOKH et al.:
"Effect of xantane hydride on the adhesion of
rubber to metal"

The file contains technical information
submitted after the application was filed and
not included in this specification

(73) Proprietor: **THE GOODYEAR TIRE & RUBBER
COMPANY**
**1144 East Market Street**
**Akron, Ohio 44316 (US)**

(72) Inventor: **Creasey, Jack R.**
**1265 Wednesbury Circle 4A**
**Akron Ohio 44313 (US)**
Inventor: **Mowdood, Syed Kahawja**
**573 Cliffside Drive**
**Akron Ohio 44313 (US)**

(74) Representative: **Weyland, Joseph Jean Pierre**
**Goodyear International Tire Technical Center**
**Patent Department Avenue Gordon Smith**
**L-7750 Colmar-Berg (LU)**

Courier Press, Leamington Spa, England.

**0 048 678**

**Description**

Field of invention

This invention relates to the adhesion of metal to elastomers. The invention particularly relates to a composite of rubber and wire filament or cabled wire filaments in the form of a cord as reinforcement therefor. The invention further relates to a composite of sulfur cured rubber and tire cord, composed of at least one metallic-plated steel filament as a reinforcement therefore, and particularly to a pneumatic or semi-pneumatic rubber tire containing such reinforcement. The invention additionally relates to rubber industrial power transmission belts, conveyor belts and to rubber hose containing such reinforcement.

Background of the invention

Adhesion of rubber to metal has for a long time been the subject of considerable experimentation and research. Various solutions have been suggested and have provided various degrees of success.

For example, various physical configurations of cabled wire filaments have been used to enhance physical or mechanical adhesion to rubber. Also, the surface of wire filaments has been treated by various materials and methods to enhance adhesion to rubber. Further, various materials for example Cobalt Naphthenate, have been mixed with the rubber itself in an effort to increase its adhesion to a cord of cabled wire filaments. Example of these prior art solutions are illustrated in US—A—3897583 and US—A—4148764.

Such rubber-metal reinforced composites are often applicable to the construction of pneumatic tires, industrial belts and hose.

However, even with the extensive amount of work and suggested solutions, methods of enhancing adhesion of rubber to metal are still being sought.

Disclosure and practice of the invention

In accordance with this invention, a composite of sulfur-vulcanized rubber composition containing zinc oxide, carbon black, and/or mineral fillers such as clay and/or precipitated silica, cure accelerators, fatty acid and/or ester thereof such as stearic acid or zinc stearate and metal reinforcement therefor which is at least one cord of at least one metallic-plated steel wire filament adhered to said rubber at least in part through sulfur vulcanization, characterized in that said rubber composition contains (A) from about 0.05 to about 3, preferably about 0.2 to about 0.8 parts by weight per 100 parts by weight of rubber (phr) of at least one cobalt compound selected from at least one of cobaltous hydroxide, cobaltous oxide, cobaltic oxide and cobalt carbonate and (B) about 0.2 to about 8, preferably about 0.5 to about 3 phr of at least one compound co-active with said cobalt compound selected from (1) monocarboxylic acids, (2) dicarboxylic acids, (3) polycarboxylic acids other than dicarboxylic acids, (4) mono and/or dihydroxyl substituted alkyl benzene or benzene and (5) organic chelating agents; wherein the weight ratio of said cobalt compound to said co-active compound (or material is in the range of 1:6.4 to 1.1.

Preferably, about a stoichiometric amount of the coactive compound is used, based on its reaction with said cobalt compound although a more or less amount can be used.

In further accordance with this invention, such a composite is provided of the sulfur-vulcanized rubber composition and, containing therein as reinforcement therefor, at least one metal filament, optionally as a multiple of filaments cabled together as a cord, said metal filament composed of a steel filament having a microscopically thin metallic coating thereon comprised primarily of brass and/or zinc.

It is to be appreciated that such metallic-coated steel filament can optionally also have a thin overcoat thereon of protective compound such as, for example, benzotriazole or similarly protective compound.

In further accordance with this invention, a pneumatic and/or semi-pneumatic rubber tire is provided typically having a generally toroidal shape and comprised of a general construction containing a tread, spaced inextensible beads and sidewalls connecting said beads and tread and with a supporting carcass therefor, where said carcass is a metal filament-reinforced sulfur-cured rubber composite of this invention.

In addition, in accordance with this invention an industrial article of manufacture is provided selected from at least one of industrial conveyor belt, power transmission belt and hose which are, at least in part, constructed of the metal filament-reinforced sulfur-vulcanized rubber composite of this invention.

It is understood that other conventional materials can be used in the compounding of the rubber which include antidegradants, tackifying resins of the non-reactive type, peptizers, fillers and/or pigments and processing oils. Although it is related herein that the various mineral fillers can be used, usually the carbon black is preferred.

For the compounding of the rubber and the preparation of the wire/rubber composite, the compounding materials are simply mixed together to form the compounded rubber and applied to the filament or cord thereof, usually in a form of a textile type fabric form, such as by calendering and the resulting composite built into a green tire, industrial belt or hose construction and the product simply molded and cured with the aid of pressure to form the article of manufacture. Generally, the rubber/metal composite is cured at a temperature in the range of about 50°C to about 200°C.

Various rubbers can be used in the practice of this invention of which unsaturated types are preferred. Representative of such unsaturated rubbers are for example, natural rubber, synthetic cis 1,4-polyisoprene, trans 1,4-polyisoprene, cyclene rubbers, rubbery polymers of 1,3-polybutadiene, butadiene/styrene

2

copolymers, isoprene/styrene copolymers, isoprene/α-methylstyrene copolymers, butadiene/acrylonitrile copolymers, EPDM rubbers, butyl rubbers, halobutyl rubbers, norbornene rubbers, thiokol rubbers and blends thereof.

The wire cord itself in the practice of this invention can be composed of 2 to 50 (or more) filaments of steel wire twisted, or cabled together to form the cord. Therefore, the cord can be monofilament in nature although this is considered rare and at least four filaments are usually preferred. For example, for use in pneumatic rubber tires, cord for passenger tires might be composed of 3 to 6 cabled filaments, cord for truck tires 10 to 30 cabled filaments and cord for giant earthmover vehicle tires 40 to 50 cabled filaments.

It is generally preferred that the steel filaments themselves are individually coated, or plated, with transition metal or alloy thereof which are preferably microporous, often practically monomolecular representative of which are at least one of those selected from brass, zirconium, cerium, lanthanum, nickel, cobalt, tin, titanium, zinc, copper and bronze. Generally, an outer monomolecular, microporous layer of zinc suitable over a very thin brass plate on the steel wire.

It is recognized that the steel wire can be plated or coated with the metal or metal alloy such as brass and/or transition metal or alloy by various methods to obtain a thin, preferably a practically monomolecular coat and usually somewhat microporous in nature. For, electro deposition can be used by passing the wire through a charged electrolyte bath.

It may also be feasible to use a vapor deposition technique to plate the wire.

The metal coating on the steel is generally microscopically porous thereby perhaps exposing small areas of steel surface.

It is not reasonably practical to describe within rigid limits the metal plating on the steel wire. Optimum thicknesses and amounts can be a function of variables such as nature of the brass, zinc, or brass-zinc or metal alloy surface, mode of deposition, thickness of initial oxide layers, magnitude of residual stresses, copper content, brass thickness, as well as the reactivity of the rubber-vulcanization system.

The steel wire can relate generally to what is known as carbon steel, also called ordinary steel, also called straight carbon steel or plain carbon steel, e.g., American Iron and Steel Institute Grade 1070 high-carbon steel (AISI 1070). Such steel owes its properties chiefly to the presence of carbon without substantial amounts of other alloying elements. In this respect see Metals Handbook, The American Society for Metals, Metals Park.

Brass generally and preferably relates to compositions in which the major component is alpha brass, i.e., which contain from about 62 to 75 percent copper and 38 to 25 percent zinc, respectively.

The cobalt compound and co-active compound can be mixed with the rubber and its compounding ingredients by conventional procedures prior to application to the metal filament (wire).

As hereinbefore pointed out, the plated wire may contain a coating of protective material such as benzotriazole prior to application of the compounded rubber. Such protective agent coatings are those which are believed to somewhat interact with copper in a brass coating on the steel wire to form a polymeric complex of agent plus copper and/or zinc. This polymeric complex is insoluble in most solvents and serves as a protective barrier to environmental degradation of the underlying brass.

The practice of the present invention has been observed to result in improved aged rubber-metal adhesion, in many cases with improved initial, i.e., original adhesion of vulcanized brass-coated steel/rubber composites.

Of the co-active compound for use with the cobalt compound, various mono-, di- and poly-carboxylic acids can be used, such as those having 1 to 40, preferably 3 to 40 carbon atoms and various hydroxyl-substituted benzenes and organic chelating agents can be used which are preferably rubber soluble and which can complex with the said cobalt compound.

The monocarboxylic and dicarboxylic acids are the preferred co-active compounds.

Representative of the various monocarboxylic acids are propionic, butyric, hexanoic, octanoic, undecylenic, decanoic, stearic, linolenic, oleic, behenic, naphthenic, abietic, dehydroabietic, pimaric, isostearic and hydroxy stearic acids. The undecylenic, stearic, oleic, and abietic acids are preferred.

Representative of the various dicarboxylic acids are azelaic, sebacic, suberic, succinic, maleic, adipic and phthalic acids. Anhydrides of maleic and phthalic acids are to be included. The azelaic, maleic and adipic acids are preferred dicarboxylic acids.

Dimer and trimer acids (polycarboxylic acids) can also be suitable. The dimer or trimer acids can be acyclic or cyclic ($C_8$—$C_{50}$) and can contain two or more carboxyl groups. Examples of such polycarboxylic acids might be selected from those identified as Empol dimer and trimer acids from the Emery Industries company and as Hystrene dimer and trimer acids from the Humko Products company.

Representative of various hydroxyl-substituted benzenes are nonyl phenol, octyl phenol, hexyl phenol, decyl phenol, catechol and resorcinol. The nonyl, octyl, hexyl and decyl phenols are generally preferred if a hydroxyl-substituted benzene is used.

Representative of the various organic chelating agents are ethylene diamine tetraacetic acid, diethylene triamine pentaacetic acid and oxalyl bis-benzylidene hydrazide, oxamide, N-hydroxyethylene diamine tetraacetic acid, N,N'-disalicylidene-1-2-propane diamine, citric acid, tartaric acid, iminodiacetic acid, lauroyl iminodiacetic acid and oleoyl iminodiacetic acid.

The practice of this invention is further illustrated by reference to the following examples which are intended to be representative rather than restrictive of the scope of the invention. Unless otherwise indicated, all parts and percentages are by weight.

Example I

A compounded rubber was prepared as a control by mixing natural rubber with various compounding ingredients according to the recipe shown in the following Table 1. Two controls were used and identified herein as X and Y, Control Y differs from Control X only in that it contains 1.75 phr of cobalt naphthenate.

TABLE 1

| Materials | Parts (Control X) |
|---|---|
| Natural rubber | 100 |
| Stearic acid | 2 |
| Zinc oxide | 8 |
| Antidegradants (phenolic-amine) | 1.5 |
| Tackifying resins, phenolic non-reactive | 1.5 |
| Carbon black | 65 |
| Sulfur, insoluble (80% active, 20% other) | 6.5 |
| Sulfenamide-type accelerator | 0.65 |
| Cobalt naphthenate | 0 |

The recipe for the Control X compounded rubber was modified as shown in Table 2 and compounded rubber samples prepared thereby in experiments identified herein as experiments or examples A—F in Table 2.

TABLE 2

| Compounds added to control X recipe) | Experiments (phr) | | | | | |
|---|---|---|---|---|---|---|
| | A | B | C | D | E | F |
| Cobaltous hydroxide | 0.33 | 0.3 | 0.28 | 0.28 | 0.25 | 0.25 |
| Undecylenic acid | 1.42 | — | — | — | — | — |
| Ricinoleic acid | — | — | 1.79 | — | — | — |
| Rosin acid (wood) | — | 1.5 | — | — | — | — |
| Tall oil rosin acid (Type S) | — | — | — | 1.4 | — | — |
| Mixture of fatty acid and rosin acid | — | — | — | — | 1.2 | — |

The modified rubber compounds, or compounded rubbers, were pressed onto a brass coated steel wire cord. Brass coated steel wire cord comprised several strands of wire filaments cabled or twisted together. The brass coated steel wire cords had been positioned in a parallel matrix somewhat in the form of a textile-type fabric.

After curing the composite of rubber compound and wire cord at a temperature in the range of about 85°C to about 150°C for about 20 to 90 minutes, individual samples were tested for adhesion. The samples were then later tested for aged adhesion after 10 or 15 days exposure to water at 90°C.

The results of both the adhesion and aged adhesion tests are shown in the following Tables 3-A and 3-B, wherein experiments or examples A—F correspond to the compounds A—F of Table 2. Experiments X and Y correspond to controls X and Y.

# 0 048 678

### TABLE 3-A
#### Aging condition

| Experiment | | Original adhesion | Adhesion after 10 days/$H_2O$/90° $C^1$ [2] |
|---|---|---|---|
| (Control) | Y | 444 [1] | 345 [1] |
| | A | 530 | 569 |
| (Control) | Y | 558 | 302 |
| | B | 572 | 587 |
| (Control) | Y | 510 | 363 |
| | C | 488 | 500 |

### TABLE 3-B

| Experiment | | Original adhesion | Adhesion[1] after 15 days/$H_2O$/90°C [2] |
|---|---|---|---|
| | D | 440 [1] | 505 [1] |
| (Control) | X | 427 | 412 |
| (Control) | Y | 483 | 312 |
| | F | 456 | 462 |
| | E | 538 | 607 |
| (Control) | X | 464 [1] | 401 [1] |
| (Control) | Y | 514 | 363 |

[1] pull-out force in newtons.
[2] entire sample submerged in water.

## Claims

1. A composite of sulfur-vulcanized rubber composition containing zinc oxide, carbon black and/or mineral fillers selected from clay and/or precipitated silica, cure accelerators, fatty acid and/or ester thereof and metal reinforcement therefor which is at least one cord of at least one metallic-plated steel wire filament adhered to said rubber at least in part through sulfur vulcanization, characterized in that said rubber composition contains (A) from about 0.05 to about 3 phr of a cobalt compound selected from at least one of cobaltous hydroxide, cobaltous oxide, cobaltic oxide and cobalt carbonate and (B) about 0.2 to about 8 phr of at least one compound co-active with said cobalt compound selected from (1) monocarboxylic acids, (2) dicarboxylic acids, (3) polycarboxylic acids other than dicarboxylic acids, (4) mono and/or di-hydroxyl substituted alkyl benzene or benzene and (5) organic chelating agents; wherein the weight ratio of said cobalt compound to said co-active compound is in the range of 1:6.4 to 1:1.

2. The composite of claim 1 characterized in that said metallic-plated steel wire filament is composed of a steel filament having a microscopically porous metal coating thereon composed primarily of brass and/or zinc.

3. The composite of claim 2 characterized in that the cobalt compound (A) is at least one of cobaltous hydroxide, cobaltous oxide, cobaltic oxide and cobalt carbonate and where said co-active compound (B) is selected from at least one of (1) carboxylic acids selected from (i) monocarboxylic acids selected from propionic, butyric, hexanoic, octanoic, undecylenic, decanoic, stearic, linolenic, oleic, behenic, naphthenic, abietic, dehydroabietic, pimaric, isostearic and hydroxy stearic acids, (ii) dicarboxylic acids selected from azelaic, sebacic, suberic, succinic, maleic, adipic and phthalic acids, and (iii) at least one dimer and/or trimer of such carboxylic acids, (2) at least one hydroxyl-substituted benzene selected from at least one of nonyl phenol, octyl phenol, hexyl phenol, decyl phenol, catechol and resorcinol, and (3) at least one chelating agent selected from ethylene diamine tetraacetic acid, diethylene triamine pentaacetic acid and oxalyl bis-benzylidene hydrazide, oxamide, N-hydroxyethylene diamine tetraacetic acid, N,N'-disalicylidene-1-2-propane diamine, citric acid, tartaric acid, iminodiacetic acid, lauroyl iminodiacetic acid and oleoyl iminodiacetic acid.

4. The composite of claim 1 characterized in that said steel filament has an outer, thin, practically monomolecular microporous metal coating thereon selected from at least one of zirconium, cerium, lanthanum, nickel, cobalt, tin, titanium, zinc, copper, brass and bronze plated on the steel wire.

5. The composite of claim 2 characterized by having an outer coat of zinc.

5

6. The composite of claim 4 or 5 characterized in that said wire filament has a protective overcoat of benzotriazole.

7. The composite of claims 2, 3 or 4 characterized in that said rubber is selected from at least one of natural rubber, synthetic cis 1,4-polyisoprene, trans 1,4-polyisoprene, cyclene rubbers, rubbery polymers derived from 1,3-butadiene, butadiene/styrene copolymers, isoprene/styrene copolymers, isoprene/α-methylstyrene copolymers, butadiene/acrylonitrile copolymers, EPDM rubbers, butyl rubbers, halobutyl rubbers, nonbornene rubbers, thiokol rubbers and blends thereof.

8. A pneumatic or semi-pneumatic rubber tire having a generally torroidal shape and comprised of a general construction containing a tread, spaced inextensible beads and sidewalls connecting said beads and tread and with a supporting carcass therefor characterized in that said carcass is a metal filament reinforced sulfur-cured rubber composite of claim 1.

9. An industrial article of manufacture selected from at least one of industrial conveyor belt, power transmission belt and hose characterized by being at least in part, constructed of the metal filament reinforced sulfur-vulcanized rubber composite of claim 1.

10. The rubber tire of claim 8 characterized in that the metal filament is cabled together to form cord and said cord is composed of about 2 to about 50 cabled metal-plated steel filaments, said filament composed of steel filament having a microscopically porous metal coating thereon composed primarily of brass and/or zinc.

11. The tire of claim 8 or claim 10 characterized in that its rubber composition contains at least one of said cobalt compounds and at least one of said co-active compounds (B) of claim 3.

## Patentansprüche

1. Verbund aus einer Schwefel-vulkanisierten Kautschukmasse, enthaltend Zinkoxid, Ruß und/oder Mineralfüllstoffe, ausgewählt aus Ton und/oder ausgefällter Kieselsäure, Härtungsbeschleuniger, Fettsäure und/oder Ester davon, sowie einer Metallverstärkung dafür, die wenigstens ein Cord, wenigstens eines mit Metall überzogenen Stahldrahtfilaments ist, das an dem Kautschuk wenigstens teilweise durch Schwefelvulkanisation anhaftet, dadurch gekennzeichnet, daß die Kautschukmasse (A) ungefährt 0,05 bis 3 phr einer Kobaltverbindung, ausgewählt aus wenigstens einer der Verbindungen Kobalt (II)-hydroxid, Kobalt(II)-oxid, Kobalt(III)-oxid und Kobaltcarbonat, und (B) ungefähr 0,2 bis ungefähr 0,8 phr wenigstens einer Verbindung enthält, die mit der Kobaltverbindung co-aktiv ist und aus (1) Monocarbonsäuren, (2) Dicarbonsäuren, (3) anderen Polycarbonsäuren als den Dicarbonsäuren, (4) mono- und/oder di-Hydroxyl-substituierten Alkylbenzolen oder Benzol und (5) organischen Chelierungsmitteln ausgewählt wird, wobei das Gewichtsverhältnis der Kobaltverbindung zu der co-aktiven Verbindung zwischen 1:6,4 und 1:1 liegt.

2. Verbund nach Anspruch 1, dadurch gekennzeichnet, daß das mit Metall beschichtete Stahldrahtfilament aus einem Stahlfilament mit einem mikroskopisch porösen Metallüberzug, der sich hauptsächlich aus Messing und/oder Zink zusammensetzt, besteht.

3. Verbund nach Anspruch 2, dadurch gekennzeichnet, daß die Kobaltverbindung (A) wenigstens eine der Verbindungen Kobalt(II)-hydroxid, Kobalt(II)-oxid, Kobalt(III)-oxid und Kobaltcarbonat ist, wobei die co-aktive Verbindung (B) aus wenigstens einer der folgenden Verbindungen ausgewählt wird: (1) Carbonsäuren ausgewählt aus (i) Monocarbonsäuren, ausgewählt aus Propionsäure, Buttersäure, Hexansäure, Octansäure, Undecylensäure, Dodecansäure, Stearinsäure, Linolensäure, Ölsäure, Behensäure, Naphthensäure, Abietinsäure, Dehydroabietinsäure, Pimarsäure, Isostearinsäure und Hydroxystearinsäure, (ii) Dicarbonsäuren, ausgewählt aus Azelainsäure, Sebacinsäure, Suberinsäure, Bernsteinsäure, Maleinsäure, Adipinsäure und Phthalsäure, und (iii) wenigstens einem Dimeren und/oder Trimeren derartiger Carbonsäuren, (2) wenigstens einem Hydroxyl-substituierten Benzol, ausgewählt aus wenigstens einer der Verbindungen Nonylphenol, Octylphenol, Hexylphenol, Decylphenol, Catechin und Resorzin, und (3) wenigstens einem Chelierungsmittel, ausgewählt aus Ethylendiamin, Tetraessigsäure, Diethylentriaminpentaessigsäure und Oxalyl-bis-benzylidenhydrazin Oxamid, N-Hydroxyethylendiamintetraessigsäure, N,N'-Disalicyliden-1-2-propandiamin, Zitronensäure, Weinsäure, Iminodiessigsäure, Lauroyliminodiessigsäure und Oleyliminodiessigsäure.

4. Verbund nach Anspruch 1, dadurch gekennzeichnet, daß der Stahlfilament einen äußeren dünnen praktisch monomolekularen mirkoporösen Metallüberzug aufweist, ausgewählt aus wenigstens einem der Elemente Zirkon, Cerium, Lanthan, Nickel, Kobalt, Zinn, Titan, Zink, Kupfer, Messing und Bronze, der auf dem Stahldraht aufplattiert ist.

5. Verbund nach Anspruch 2, dadurch gekennzeichnet, daß er einen äußeren Überzug aus Zink besitzt.

6. Verbund nach Anspruch 4 oder 5, dadurch gekennzeichnet, daß das Stahldrahtfilament einen schützenden Überzug aus Benzotriazol aufweist.

7. Verbund nach den Ansprüchen 2, 3 oder 4, dadurch gekennzeichnet, daß der Kautschuk aus wenigstens einem der folgenden Materialien besteht: Naturkautschuk, synthetischem cis-1,4-Polyisopren, trans-1,4-Polyisopren, Cyclenkautschuken, kautschukartigen Polymeren, die auf 1,3-Butadien zurückgehen, Butadien/Styrol-Copolymeren, Isopren/Styrol-Copolymeren, Isopren/α-methylstyrol-Copolymeren, Butadien/Acrylnitril-Copolymeren, EPDM-Kautschuken, Butylkautschuken, Halogenbutylkautschuken, Norbonenkautschuken, Thiokolkautschuken sowie Mischungen davon.

8. Pneumatischer oder halbpneumatischer Kautschukreifen mit einer im allgemeinen toroidalen Form und einer allgemeinen Konstruktion, enthaltend eine Lauffläche, in einem Abstand angeordneten sich nicht ausdehnenden Wülsten und Seitenwänden, welche die Wülste oder die Lauffläche verbinden, sowie einer stützenden Karkasse dafür, dadurch gekennzeichnet, daß die Karkasse ein mit einem Metallfilament verstärkter schwefelgehärteter Kautschukverbund gemäß Anspruch 1 ist.

9. Industrieller Gegenstand, ausgewählt aus wenigstens einem der folgenden: Industriellen Förderbändern, Energieübertragungsbändern und Schleusen, dadurch gekennzeichnet, daß er wenigstens teilweise aus dem Metallfilament verstärkten schwefelvulkanisierten Kautschukverbund gemäß Anspruch 1 besteht.

10. Kautschukreifen nach Anspruch 8, dadurch gekennzeichnet, daß das Metallfilament unter Bildung eines Cords verkabelt ist und der Cord aus ungefähr 2 bis ungefähr 50 verkabelten Metall-plattierten Stahlfilamenten besteht, wobei das Filament aus einem Stahlfilament mit einem mikroskopisch porösen Metallüberzug darauf besteht, der sich hauptsächlich aus Messing und/oder Zink zusammensetzt.

11. Reifen nach Anspruch 8 oder 10, dadurch gekennzeichnet, daß seine Kautschukmasse wenigstens eine der Kobaltverbindungen und wenigstens eine der co-aktiven Verbindungen (B) gemäß Anspruch 3 enthält.

## Revendications

1. Structure composite d'une composition de caoutchouc vulcanisé au soufre contenant de l'oxyde de zinc, du noir de carbone et/ou des charges minérales choisies parmi l'argile et/ou la silice précipitée, des accélérateurs de vulcanisation, un acide gras et/ou un ester d'acide gras, ainsi qu'un renforcement métallique pour cette structure, ce renforcement étant au moins un câblé d'au moins un filament de fil d'acier à revêtement métallique adhérant à ce caoutchouc au moins en partie par suite de la vulcanisation au soufre, caractérisée en ce que la composition de caoutchouc contient (A) environ 0,05 à environ 3 parties en poids (par 100 parties en poids de caoutchouc) d'un composé de cobalt choisi parmi au moins l'hydroxyde cobalteux, l'oxyde cobalteux, l'oxyde cobaltique et le carbonate de cobalt, et (B) environ 0,2 à environ 8 parties en poids (par 100 parties en poids de caoutchouc) d'au moins un composé co-actif avec ce composé de cobalt et choisi parmi: (1) les acides monocarboxyliques, (2) les acides dicarboxyliques, (3) les acides polycarboxyliques autres que les acides dicarboxyliques, (4) le benzène ou les alkyl-benzènes mono-substitués et/ou disubstitués par un groupe hydroxy et (5) les agents de chélation organiques, le rapport pondéral entre le composé de cobalt et le composé co-actif se situant dans l'intervalle allant de 1:6,4 à 1:1.

2. Structure composite selon la revendication 1, caractérisée en ce que le filament de fil d'acier à revêtement métallique est un filament d'acier comportant un revêtement métallique microscopiquement poreux constitué principalement de laiton et/ou de zinc.

3. Structure composite selon la revendication 2, caractérisé en ce que le composé de cobalt (A) est au moins un composé choisi parmi l'hydroxyde cobalteux, l'oxyde cobalteux, l'oxyde cobaltique et le carbonate de cobalt, tandis que le composé coactif (B) est choisi parmi au moins un des composés suivants: (1) les acides carboxyliques choisis parmi (i) les acides monocarboxyliques choisis parmi l'acide propionique, l'acide butyrique, l'acide hexanoïque, l'acide octanoïque, l'acide undécylénique, l'acide décanoïque, l'acide stéarique, l'acide linolénique, l'acide oléique, l'acide béhénique, l'acide naphténique, l'acide abiétique, l'acide déhydroabiétique, l'acide pimarique, l'acide isostéarique, l'acide hydroxystéarique, (ii) les acides dicarboxyliques choisis parmi l'acide azélaïque, l'acide sébacique, l'acide subérique, l'acide succinique, l'acide maléique, l'acide adipique et l'acide phtalique, et (iii) au moins un dimère et/ou un trimère de ces acides carboxyliques, (2) au moins un benzène substitué par un groupe hydroxy et choisi parmi au moins un des composés suivants: le nonyl-phénol, l'octyl-phénol, l'hexyl-phénol, le décyl-phénol, le catéchol et le résorcinol, et (3) au moins un agent de chélation choisi parmi l'acide éthylènediamine-tétraacétique, l'acide diéthylène-triaminepentacétique et le bis-benzylidène-hydrazide d'oxalyle, l'oxamide, l'acide N-hydroxyéthylène-diaminetétraacétique, la N,N'-disalicylidène-1,2-propanediamine, l'acide citrique, l'acide tartrique, l'acide imino-diacétique, l'acide lauroyl-imino-diacétique et l'acide oléoyl-imino-diacétique.

4. Structure composite selon la revendication 1, caractérisée en ce que le filament d'acier comporte un mince revêtement extérieur de métal pratiquement monomoléculaire et microporeux choisi parmi au moins un des métaux suivants: le zirconium, le cérium, le lanthane, le nickel, le cobalt, l'étain, le titane, le zinc, le cuivre, le laiton et le bronze, ce revêtement étant déposé sur le fil d'acier.

5. Structure composite selon la revendication 2, caractérisée en ce qu'elle comporte un revêtement extérieure de zinc.

6. Structure composite selon la revendication 4 ou 5, caractérisée en ce que le filament du fil métallique comporte un revêtement supérieur protecteur de benzotriazole.

7. Structure composite selon les revendications 2, 3 ou 4, caractérisée en ce que le caoutchouc est choisi parmi au moins un des caoutchoucs suivants: le caoutchouc naturel, les caoutchoucs synthétiques de cis-1,4-polyisoprène, de trans-1,4-polyisoprène et de cyclène, les polymères caoutchouteux dérivant du 1,3-butadiène, les copolymères de butadiène/styrène, les copolymères, d'isoprène/styrène, les copolymères d'isoprène/α-méthylstyrène, les copolymères de butadiène/acrylonitrile, les caoutchoucs d'EPDM, les caoutchoucs butyle, les caoutchoucs halobutyle, les caoutchoucs de norbornène, les caoutchoucs de Thiocol et leurs mélanges.

8. Bandage pneumatique ou semi-pneumatique en caoutchouc ayant une forme généralement toroïdale et une structure générale comportant une bande de roulement, des talons inextensibles espacés et des flancs reliant ces talons et cette bande de roulement avec une carcasse support, caractérisé en ce que cette carcasse est constitué d'une structure composite de caoutchouc vulcanisé au soufre avec renforcement par un filament métallique selon la revendication 1.

9. Article industriel manufacturé choisi parmi au moins une courroie transporteuse industrielle, une courroie de transmission et un tuyau, caractérisé en ce qu'il est réalisé au moins en partie avec la structure composite de caoutchouc vulcanisé au soufre avec renforcement par un filament métallique selon la revendication 1.

10. Bandage pneumatique en caoutchouc selon la revendication 8, caractérisé en ce que les filaments métalliques sont rassemblés pour former un câblé, ce câblé étant constitué d'environ 2 à environ 50 filaments d'acier à revêtement métallique rassemblés, ces filaments étant des filaments d'acier comportant un revêtement métallique microscopiquement poreux constitué principalement de laiton et/ou de zinc.

11. Bandage pneumatique selon la revendication 8 ou 10, caractérisé en ce que sa composition de caoutchouc contient au moins un des composés de cobalt précités et au moins un des composés co-actifs (B) de la revendication 3.